# EUROPEAN PATENT APPLICATION

(11) **EP 2 230 421 A2**
(43) Date of publication of application: **22.09.2010**
(21) Application number: 09700284.4
(22) Date of filing: 08.01.2009
(51) Int. Cl.: F16H 3/44, F16H 3/68, F16H 3/72

(54) **PLANETARY GEAR SET AND POWER TRANSMITTING APPARATUS AND USE OF THE SAME**

(30) Priority: 08.01.2008 KR 20080002304; 08.01.2009 KR 20090001520
(71) Applicant: Ha, Tae-Hwan, Nowon-gu Seoul 139-230 (KR)
(72) Inventor: Ha, Tae-Hwan, Nowon-gu Seoul 139-230 (KR)
(74) Representative: Twelmeier Mommer & Partner
(86) International application number: PCT/KR2009/000097
(87) International publication number: WO 2009/088232

(57) **Abstract**

The present invention relates to a planetary gear set and a power transmitting apparatus. In the planetary gear set, a gear tooth is formed by extending one side of a planetary carrier. In the power transmitting apparatus, multi-stage transmission is enabled by reducing a rotational speed inputted from a power-driving source and then inputting the reduced rotational speed to one operational member of the planetary gear set as well as the rotational speed of a speed changing power source to another operational member of the planetary gear set. According to an embodiment of the present invention, the power transmitting apparatus comprises: an input shaft to which a driving gear is fixed and of which one end is constantly connected to the power driving source; a decelerating unit which is combined with the driving gear and decreases the rotational speed of the input shaft; a planetary gear set including a first operational member which receives the rotational speed from the input shaft by being connected to the decelerating unit, a second operational member which receives the power for speed changing, and a third operational member at which an output speed is generated; a speed changing unit which receives the power for speed changing by being constantly connected to the speed changing power source and that is also connected to the second operational member in order to transmit the power for speed changing to the second operational member; and an output shaft which is fixed to the third operational member of the planetary gear set to transmit the output speed, wherein the operational shaft of the second operational member may be perpendicular to the rotational shaft of the speed changing unit.

## Description

### FIELD OF THE INVENTION

The invention relates generally to a planetary gear set and power transmitting apparatus using the same which may be employed in automobiles, vessels, windmills, and converter motors et cetera, more particularly to a power transmitting apparatus that comprises a planetary gear set having planet carrier extended from one side and formed gear teeth at the extended portion, wherein the rotate speed from a drive power source is reduced to be inputted to an operative member of the planetary gear set and the rotate speed from a transmit power source is inputted to another operative member of the planetary gear set so that multiple transmit steps may be realized.

### BACKGROUND ART

As is generally known, a transmission is an apparatus that transmits the input power from a drive power source to an output shaft, after altering the input power to a suitable rotate speed according to driving conditions. The transmissions include the manual transmission that a driver can get to his desired transmit step by manipulation of a transmit lever and the automatic transmission that can automatically get to an adequate transmit step based on the car speed and opening level of the throttle. The manual transmission has high fuel efficiency but difficult to manipulate, while the automatic transmission is easy to manipulate but has low fuel efficiency.

Generally speaking, the greater the number of transmit steps that could be get by the transmission, the higher the fuel efficiency of automobile becomes. The automatic transmission, however, includes a plurality of planetary gear sets, and friction elements for manipulating each of the operative members in the plurality of planetary gear sets. Therefore, for the automatic transmission, the greater the number of transmit steps, the greater the number of the planetary gear sets and the friction elements becomes, which results in weight increase of the automatic transmission, hence lowering the fuel efficiency. So usually the number of transmit steps in the automatic transmission is to be smaller than that in the manual transmission.

Besides, some additional devices used in an automobile et cetera, are connected directly to the drive power source, so that may continue to operate during the automobile is not moving. However, between the drive power source and the input shaft a damper clutch is mounted, so the additional devices could not be connected to the input shaft. Therefore space for mounting the additional devices is insufficient.

To solve above mentioned problems, methods for realizing a plurality of transmit steps had been proposed, wherein the rotate speed of a drive power source couples with an operative member of a planetary gear set, and the rotate speed of a transmit power source couples with an another operative member of the planetary set.

According to the above methods, however, the torque of the drive power source was to be applied to the transmit power source, which causes serious loss of the torque. And the rotate speed of the drive power source was to be directly coupled with the planetary gear set without speed reduction, so a transmit power source that can supply strong torque is required for easy transmit operation.

### OBJECTS OF THE INVENTION

Therefore, the present invention has been invented to solve above problems. An object of the present invention is to provide a planetary gear set having planet carrier extended from one side and formed gear teeth at the extended portion of the planet carrier.

Another object of the present invention is to provide a power transmission apparatus that uses the planetary gear set and the transmit power source so as to realize various forward and reward transmit steps.

Yet another object of the present invention is to provide a power transmission apparatus that uses the planetary gear set wherein additional devices may be couples with an input shaft which is directly connected to a drive power source.

And yet another object of the present invention is to provide a power transmission apparatus in which the loss of torque of the transmit process of the planetary gear set can be minimized, so that it is able to operate between various transmit steps using a transmit power source which supplies relatively weak torque.

Finally yet another object of the present invention is to provide a power transmission apparatus in which, the slip that may be occurred at connect portions between operative members of the planetary gear set and the transmit power source, may be minimized.

To accomplish said objects, according to an aspect of the invention, a power transmitting apparatus is provided.

A power transmitting apparatus according to embodiments of the invention is characterized that it may comprise: an input shaft that its one end constantly connected to a drive power source for supplying power, and on which a drive gear is fixed; a reduction unit that is connected to the drive gear, for reducing the rotate speed of the input shaft; a planetary gear set which comprises a first operative member connected to the reduction unit and coupled with the rotate speed of the reduction unit, a second operative member supplied with transmit power, and a third operative member to generate output speed; a transmit unit that constantly connected to a transmit power source and supplied with transmit power therefrom, and connected to the second operative member for transmitting the transmit power thereto; and an output shaft fixed at the third operative member of the planetary gear set for transmitting the output speed, wherein the rotate axis of the second operative member is perpendicular to the rotate axis of the reduction unit.

The planetary gear set is a single pinion planetary gear set including operative members that comprise a sun gear, a planet carrier, and a ring gear, wherein the ring gear may operate as the first operative member, the planet carrier may operate as the second operative member, and the sun gear may operate as the third operative member.

The power transmitting apparatus further includes a control part, wherein the control part may control the operation of the transmit power source according to the speed of the output shaft and the operation level of a brake.

The control part is capable of controlling the rotate speed of the output shaft and may perform braking, by changing the rotate speed of the transmit power source.

The transmit power source may be a motor.

For a power transmitting apparatus according to first embodiment of the invention, the reduction unit is characterized that it comprises: a reduction shaft aligned parallel with the input shaft; a reduction gear fixed to the reduction saft and gear-connected to the drive gear; a forward gear and a reward gear mounted on the reduction shaft and being rotatable on the reduction shaft; and a synchronizer that selectively connects one of the forward gear and the reward gear to the reduction shaft to rotate with the reduction shaft, wherein the forward gear is constantly gear-connected to the first operative member.

The reduction unit may further include an idle shaft that is supplied with the rotate speed of the reward gear to rotate ; a first carrier gear that is fixed to the idle shaft and gear-connected to the first operative member; and a second carrier gear that is fixed to the idle shaft and gear-connected to the forward gear.

The synchronizer may operate according to the position of an operative lever.

At least one of the other end of the input shaft and the reduction unit is connected an additional device.

The reduction unit may include a transmit input shaft that its one end is connected to the transmit power source and supplied with the transmit power from the transmit power source; and a worm gear formed on the other end of the transmit input shaft and gear-connected to the second operative member.

For a power transmitting apparatus according to second embodiment of the invention, the reduction unit is characterized that it comprises a plurality of shafts aligned parallel with the input shaft and a plurality of gears mounted on the plurality of shafts, wherein two gears having different numbers of gear teeth mount on each one of the plurality of shafts, one gear of two gears formed on one shaft is gear-connected to one gear of two gears mounted on another shaft so that power from the input shaft may be transmitted to the planetary gear set, one gear of the plurality of gears is gear-connected to the drive gear, another gear of the plurality of gears is gear-connected to the first operative member.

The gear having smaller number of gear teeth of two gears formed on each of the shafts is gear-connected to the gear on the shaft which is closest to the drive power source in power transmitting line, while the gear having larger number of gear teeth of two gears formed on each of the shafts is gear-connected to the gear on the shaft which is closest to the planetary gear set in power transmitting line.

The transmit unit may include a plurality of transmit input shafts, aligned perpendicular to each other and also aligned perpendicular to the output shaft; first gears mounted and rotated on each of the transmit input shafts, and gear-connected to the second operative member; and second gears mounted and rotated on each of the transmit input shafts, wherein one second gear mounted one transmit input shaft is gear-connected to another second gear mounted another transmit input shaft, one of the transmit input shafts is connected to the transmit power source and supplied with transmit power.

The first gears may be worm gears and the second gears may be helical gears.

A planetary gear set according to embodiments of the invention is characterized that it may comprise: a sun gear, with gear teeth formed on its outer circumference surface, that is attached a rotate shaft so that can transmit power to the rotate shaft or be supplied with power from the rotate shaft; a ring gear, with gear teeth formed on its inner circumference surface, that encircles the sun gear and relatively rotates about the sun gear; a plurality of pinion gears that are gear-connected to the gear teeth of the sun gear's outer circumference surface and the gear teeth of the ring gear's inner circumference surface; and a planet carrier on which the plurality of pinion gears rotatably mounted, that rotates according to the rotate of the pinion gears, wherein one side of the planet carrier has an extended part that extends along the direction of its rotate axis, gear teeth slant to the rotate axis are formed on the outer circumference surface of the extended part so as to be connected to a worm gear or a helical gear.

The outer circumference surface of the ring gear may have gear teeth.

A power transmitting apparatus according to embodiments of the invention is characterized that it may comprise: an input shaft of which a drive gear is formed on its outer circumference surface of one side; a reduction unit that includes a reduction shaft having a reduction gear which is gear-connected to the drive gear; a ring gear with gear teeth formed on its outer circumference surface that is circumscribed with the reduction gear; a plurality of pinion gears circumscribed with gear teeth formed on inner circumference surface of the ring gear; an output shaft on which a sun gear circumscribed with the plurality of pinion gears mounted; a planet carrier, connected to center shafts of the pinion gears, that rotates on the output shaft according to the rotate of the pinion gears; an extended part that extends from the planet carrier to the axis direction of the output shaft; a worm gear and a drive helical gear that are formed on the outer circumference surface of the extended part; a transmit input shaft, with a worm wheel formed on its outer circumference surface and aligned perpendicular to the output shaft, that rotates by a transmit power source; a control part that controls the rotate speed of the transmit input shaft.

The reduction unit may include a first reduction gear formed on the reduction shaft; and a second reduction gear formed on the reduction shaft with a gap between the first reduction gear.

The first reduction gear may be connected to the drive gear, and the second reduction gear is the gear teeth formed on the outer circumference surface of the ring gear.

The reduction shaft may be arranged parallel with the input shaft, and the input shaft and the output shaft are aligned on a same axis.

A power transmitting apparatus according to embodiments of the invention is characterized that it may comprise: an input shaft of which a drive gear is formed on its outer circumference surface of one side; a reduction shaft having a reduction gear which is gear-connected to the drive gear; a driving bevel gear formed on one end of the reduction shaft; a ring gear with a passive bevel gear formed on its one side, the passive bevel gear is gear-connected to the drive bevel gear; a plurality of pinion gears circumscribed with gear teeth formed on inner circumference surface of the ring gear; an output shaft on which a sun gear circumscribed with the plurality of pinion gears mounted and rotated together; a planet carrier, connected to center shafts of the pinion gears, that rotates on the output shaft according to the rotate of the pinion gears; an extended part that extends from the planet carrier to the axis direction of the output shaft; a worm gear and a drive bevel gear that are formed on the outer circumference surface of the extended part; a transmit input shaft, with a worm wheel formed on its outer circumference surface and perpendicular to the output shaft, that rotates by a transmit power source; and a control part that controls the rotate speed of the transmit input shaft according to the rotate speed of the output shaft and operation of a brake.

The passive bevel gear may be formed on one side of the ring gear, and the extended part is extended from the other side of the ring gear.

A power transmitting apparatus according to embodiments of the invention is characterized that it comprises: an input shaft of which a drive gear is formed on its outer circumference surface of one side; a ring gear arranged at the end of the input shaft and rotated by the input shaft; a plurality of pinion gears circumscribed with gear teeth formed on inner circumference surface of the ring gear; an output shaft on which a sun gear circumscribed with the plurality of pinion gears mounted; a planet carrier, connected to center shafts of the pinion gears, that rotates on the output shaft according to the rotate of the pinion gears; an extended part that extends from the planet carrier to the axis direction of the output shaft; a worm gear and a drive bevel gear that are formed on the outer circumference surface of the extended part; a transmit input shaft, with a worm wheel formed on its outer circumference surface and perpendicular to the output shaft, that rotates by a transmit power source; and a control part that controls the rotate speed of the transmit input shaft according to the rotate speed of the output shaft and operation of a brake.

### BRIEF DESCRIPTION OF THE DRAWINGS

- Fig. 1: is a schematic representative view illustrating construct of a power transmitting apparatus according to first embodiment of the invention.
- Fig. 2: is a schematic representative view illustrating construct of the power transmit- ting apparatus of Fig. 1 omitted an idle shaft.
- Fig. 3: is a schematic representative view illustrating construct of the power transmit- ting apparatus of Fig. 2 omitted an transmit input shaft.
- Fig. 4: is a graph representing speeds for forward transmit steps of the power trans- mitting apparatus according to the first embodiment of the invention.
- Fig. 5: is a slant view illustrating construct of a power transmitting apparatus accord- ing to second embodiment of the invention.
- Fig. 6: is a rear view illustrating construct of a power transmitting apparatus according to second embodiment of the invention.
- Fig. 7: is an exploded slant view of a planetary gear set using for embodiments the invention.
- Fig. 8: is a slant view illustrating construct of a power transmitting apparatus accord- ing to third embodiment of the invention.
- Fig. 9: is a plane view illustrating a power transmitting apparatus according to third embodiment of the invention.
- Fig. 10: is a slant view illustrating a power transmitting apparatus according to forth embodiment of the invention.
- Fig. 11: is a plane view illustrating a power transmitting apparatus according to forth embodiment of the invention.

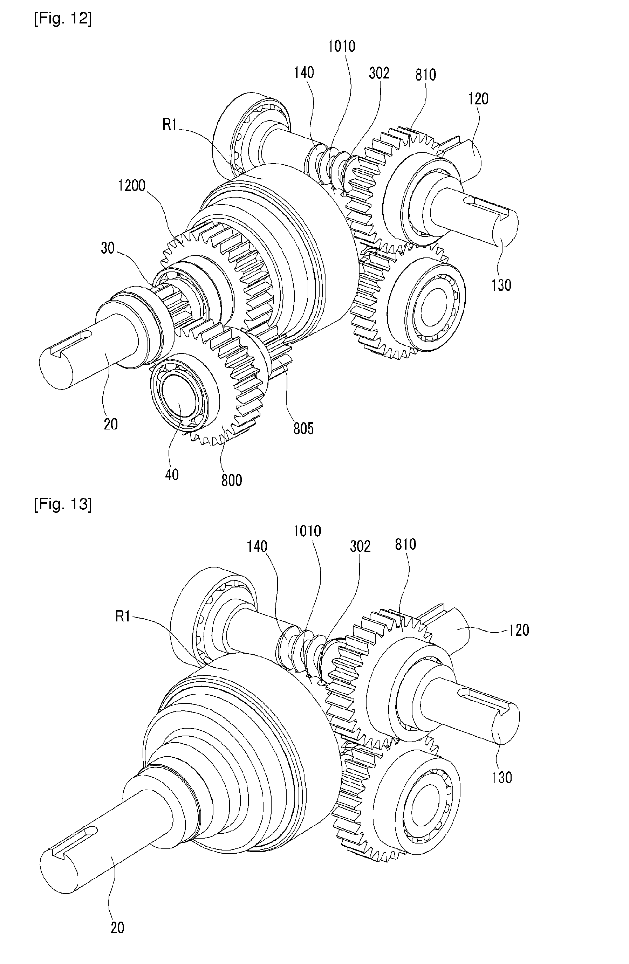

- Fig. 12: is a slant view illustrating a power transmitting apparatus according to fifth embodiment of the invention.
- Fig. 13: is a slant view illustrating a power transmitting apparatus according to sixth embodiment of the invention.

Example embodiments may, however, be embodied in different forms and should not be considered as limited to the embodiments set forth in the drawings. Rather, these embodiments are provided so that this disclosure will be thorough and complete, and will fully convey the scope of the invention to those skilled in the art.

### DETAILED DESCRIPTION OF PREFERRED AND OTHER EMBODIMENTS

The nature and mode of the operation of the present invention will now be more fully described in the following detailed description of the invention taken with the accompanying drawing Figures.

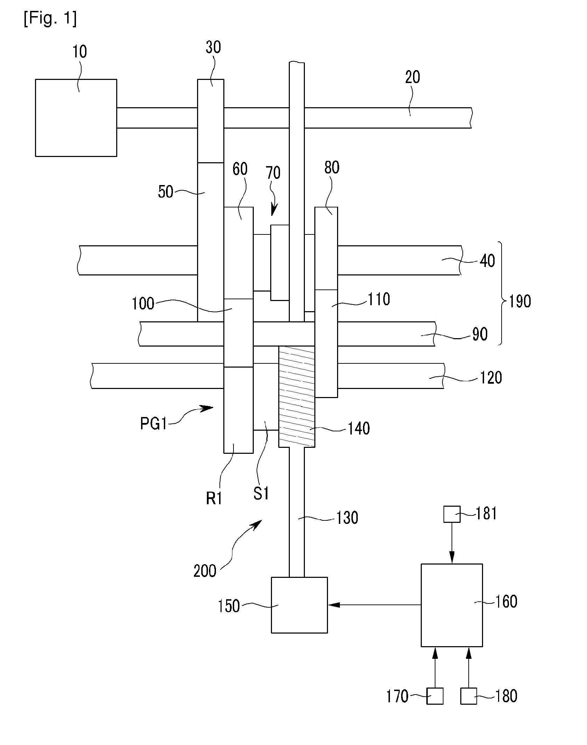

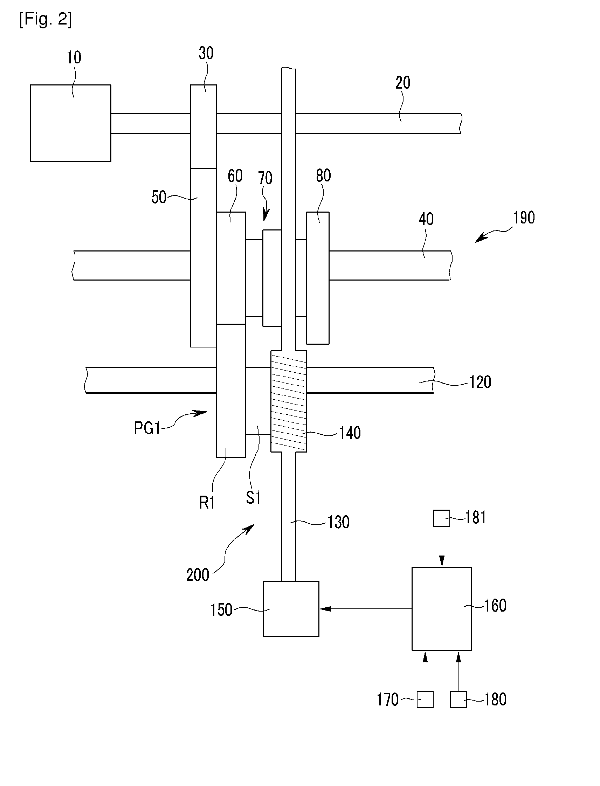

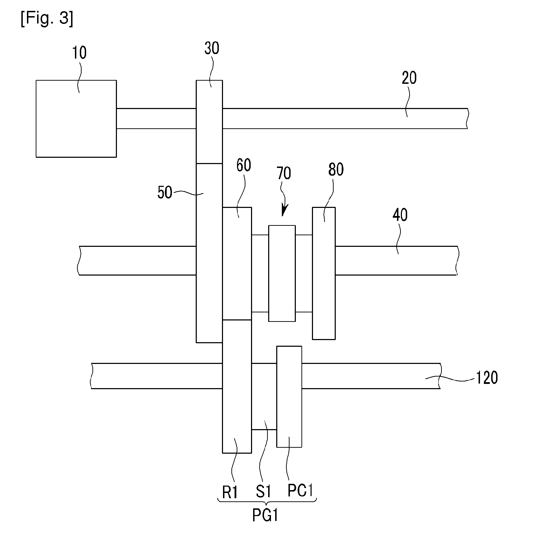

Fig. 1 is a schematic representative view illustrating construct of a power transmitting apparatus according to first embodiment of the invention, Fig. 2 is a schematic representative view illustrating construct of the power transmitting apparatus of Fig. 1 omitted an idle shaft, and Fig. 3 is a schematic representative view illustrating construct of the power transmitting apparatus of Fig. 2 omitted an transmit input shaft.

As shown in Figs.1 to 3, a power transmitting apparatus according to first embodiment of the invention includes an input shaft 20, a reduction unit 190, a planetary gear set PG1, an output shaft 120, a transmit unit 200, and a control part 160.

The input shaft 20 has its one end connected directly to a drive power source 10 for being supplied with the rotate speed of the drive power source 10. A drive gear 30 is fixed on the input shaft 20 such that the input shaft 20 and the drive gear 30 rotate at same speed together. The drive power source 10 may be a gasoline, a diesel, a LPG, or a hydrogen engine; an electrical, a hydraulic, or a pneumatic motor; or a turbine rotated by air or tidal power, et cetera.

The reduction unit 190 includes a reduction shaft 40, a reduction gear 50, a forward gear 60, a reward gear 80, a synchronizer 70, an idle shaft 90, and first and second carrier gears 100 and 110.

The reduction gear 50, the forward gear 60, the reward gear 80, and the synchronizer 70 are mounted on the reduction shaft 40.

The reduction gear 50 is fixed on the reduction shaft 40 and is gear-connected with the drive gear 30. The number of gear teeth of the reduction gear 50 is larger than that of the drive gear 30, so the rotate speed of the input shaft 20 can be decreased when it is transmitted to the reduction shaft 40.

The forward gear 60 and the reward gear 80 are mounted to rotate on the reduction shaft 40.

The synchronizer 70 may move to left or right direction on Figs. 1 to 3 to selectively fix the forward gear 60 or the reward gear 80 to the reduction shaft 40. That is, when the synchronizer 70 moves to left direction on Figs. 1 to 3, the forward gear 60 get fixed to the reduction shaft 40 and rotates together with the reduction shaft 40, while when the synchronizer 70 moves to right direction on Figs. 1 to 3, the reward gear 80 get fixed to the reduction shaft 40 and rotates together with the reduction shaft 40. When the synchronizer 70 is positioned at center between the forward and reward gears, it is an idle sate. The synchronizer 70 may be constructed electronically or mechanically. In case of mechanical synchronizer 70, its operation may be controlled by a fork(not shown) connected via cable to an operative lever(not shown), while in case of electronic synchronizer 70, its operation may be controlled by signals from the control part 160. Such synchronizer 70 is widely used and known in the field of manual transmission, in here detailed description of the synchronizer 70 will be omitted.

The first and second carrier gears 100 and 200 are fixed on the idle shaft 90. The second carrier gear 110 is gear-connected to the reward gear 80.

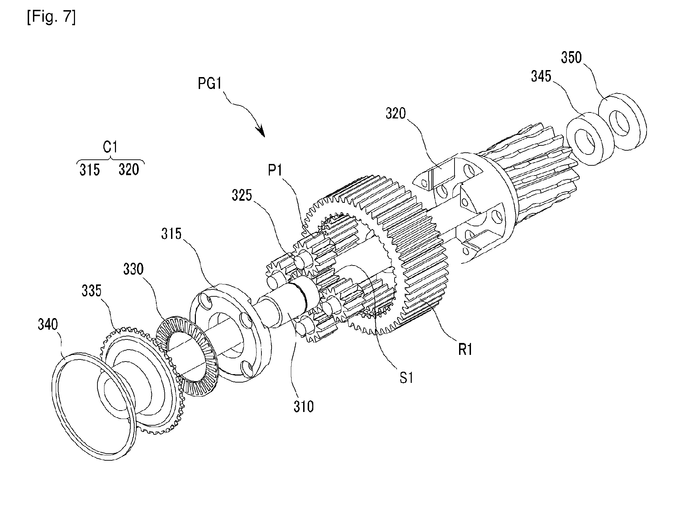

The planetary gear set PG1, as shown in Fig.7, includes a sun gear S1, a planet carrier PC1, and a ring gear R1 as its operative members. A pinion gear P1 that is gear-connected to the ring gear R1 and the sun gear S1, is rotatably mounted on the planet carrier PC1 via a pinion shaft 325. The operative members S1, PC1, and R1 rotate relative to each other.

And, an assemble disk 340 and hubs 345 and 350 for assembling of the planetary gear set PG1 are mounted on each of both sides of the planetary gear set PG1.

The ring gear R1 has gear teeth on its inner circumference surface and its outer circumference surface, in which the gear teeth of its inner circumference surface are gear-connected to the pinion gear P1 and a sleeve 335. And, the ring gear R1 operates as the first operative member. The forward gear 60 is gear-connected and the first carrier gear 100 is also gear-connected to the outer circumference surface of the ring gear R1. Hence when the synchronizer 70 moves to fix the forward gear 60 to the reduction shaft 40, power of the drive power source 10 is inputted to the ring gear R1 via the forward gear 60, while when the synchronizer 70 moves to fix the reward gear 80 to the reduction shaft 40, power of the drive power source 10 is inputted to the ring gear R1 through in turn the reward gear 80, the second carrier gear 110, and the first carrier gear 100.

The planet carrier PC1 includes a carrier cup 320 and a carrier cover 315 which are fixed to each other. The pinion gear P1 is rotatably mounted between the carrier cup 320 and the carrier cover 315, so that the planet carrier may rotate according to the rotate of the pinion gear P1. And, a bearing 330 is mounted between the carrier cover 315 and the sleeve 335 so as to decrease friction occurred due to rotating. The carrier cup 320 has an extended part that extends to the direction of opposite rotate axis 310 of the carrier cover 315 and that has gear teeth on its outer circumference surface. The gear teet of the outer circumference surface of the extended part are inclined relative to its rotate axis so that reversion could be prevented by gear-connecting it with a worm gear or a helical gear. Therefore, the planet carrier PC1 operates as a second operative member and is supplied with transmit power(that is, power to use for transmitting) from the transmit input shaft 130. The transmit power is supplied to a worm wheel 302 mounted on the outer circumference surface of the extended part by a worm gear or a helical gear.

The sun gear S1 has gear teeth on its outer circumference surface, operates as third operative member, and is fixed to an output shaft 120, or the rotate shaft 310. So, the sun gear S1 may receive power from the rotate shaft 310 or may supply power to the rotate shaft 310.

The planetary gear set PG1 as such may change the rotate speed of the output shaft using the rotate speed of the reduction shaft 40 and the rotate speed of the transmit input shaft 130.

The output shaft 120 is connected to a differential(not shown) so as to rotate wheels(not shown).

The transmit unit 200 includes a transmit input shaft 130 and a worm gear 140.

The transmit input shaft 130 has its one end connected to a transmit power source 150 so as to be supplied with transmit power, wherein the worm gear 14 is fixed on its middle portion. The worm gear 14 is gear-connected to the planet carrier to transfer power so that the loss of torque of the drive power source 10 can be decreased by the transmit input shaft 130. And since the rotate speed of the drive power source 10 is reduced by the reduction gear 50, and then inputted to the planetary gear set PG1, so it is not needed that the rotate speed of the transmit input shaft 130 has to be over-driven for achieving desired rotate speed of the output shaft 120. The gear teeth of the planet carrier PC1 could be formed as helical shape and a helical gear(not shown) could be used, instead using the worm gear 140.

And, a pair of transmit input shaft 130 could be mounted under and above the planet carrier PC1, and the pair of transmit input shaft 130 could be connected by power transfer means such as belt or chain.

The transmit power source 150 may be one of various means for generating rotate speed such as a DC motor, a hydraulic motor etc., or preferably means for generating rotate speed that can be easily controlled its rotate speed by control of the control part 160.

The control part 160 controls the operation of the transmit power source 150 for achieving transmission to a target transmit step. The control part 160 includes a brake position sensor 170, a output shaft speed sensor 180, and an operative lever position sensor 181, and could be embodied as one or more processors operating based on predetermined programs.

The brake position sensor 170 senses the operating level of a brake pedal, the output shaft speed sensor 180 senses the rotate speed of the output shaft 120, and the operative lever position sensor 181 senses the position of the operative lever(not shown).

Therefore, the control part 160 may calculate a target transmit step or a target braking force based on position of the brake, speed of the output shaft 120, and position of the operative lever, and accordingly control the rotate speed of the transmit power source 150.

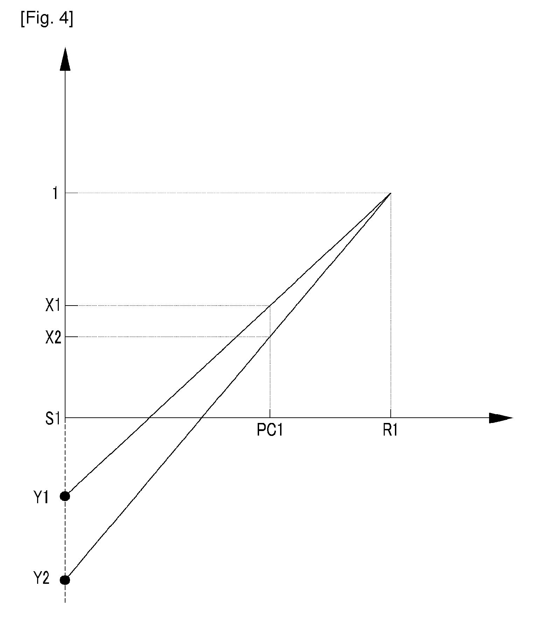

Fig. 4 is a graph representing speeds for forward transmit steps of the power transmitting apparatus according to the invention. In Fig.4, the rotate speed of sun gear S1 are to be positive below the horizontal axis and negative above the horizontal axis.

In case of forward transmit steps in which the synchronizer 70 fixes the forward gear 60 to the reduction shaft 40, suppose that the rotate speed inputted to the ring gear R1 from the reduction gear 50 which reduces the rotate speed of the input shaft 20 is 1, that the rotate speed inputted to the planet carrier PC1 from the transmit power source 150 is first rotate speed X1, and that the rotate speed transferred to the output shaft 120 via the sun gear S1 is first output speed Y1. When the control part 150 determines the rotate speed to be output as second output speed Y2, it controls the rotate speed inputted to the planet carrier PC1 from the transmit power source 150 to be the second output speed Y2. In this manner, the target transmit step could be achieved by changing the rotate speed input to the planet carrier PC1 from the transmit power source 150.

The reward transmit steps could be realized by increasing the rotate speed of the transmit power source 150, but in this case the transmit power source 150 could rotate at excessive rotate speed. Hence, the power transmitting apparatus according to the invention embodies the reward transmit steps using an idle shaft 90 and first and second carrier gears 100 and 110. That is, when the synchronizer 70 fixes the reward gear 80 to the reduction shaft 40, the rotate speed of the reduction shaft 40 is transferred, not directly but rather indirectly, via the idle shaft 90 to the ring gear R1. During the process, the rotate speed transferred to the ring gear R1 has reversed direction. Hence the reward transmit steps can be realized by same manner as the realization of the forward transmit steps.

Another manner for realizing the reward transmit steps is to increasing the rotate speed input to the planet carrier PC1.

And, the power transmitting apparatus according to the invention may embody the braking operation as a brake installed on the wheels, or alternatively as control operation of the rotate speed of the transmit power source 150.

For example, consider that braking is needed as the car driving with a forward transmit step, then increase of the rotate speed of the transmit power source 150 should apply reverse-rotate force on the output shaft 60. Hence the response property of braking could be shortened.

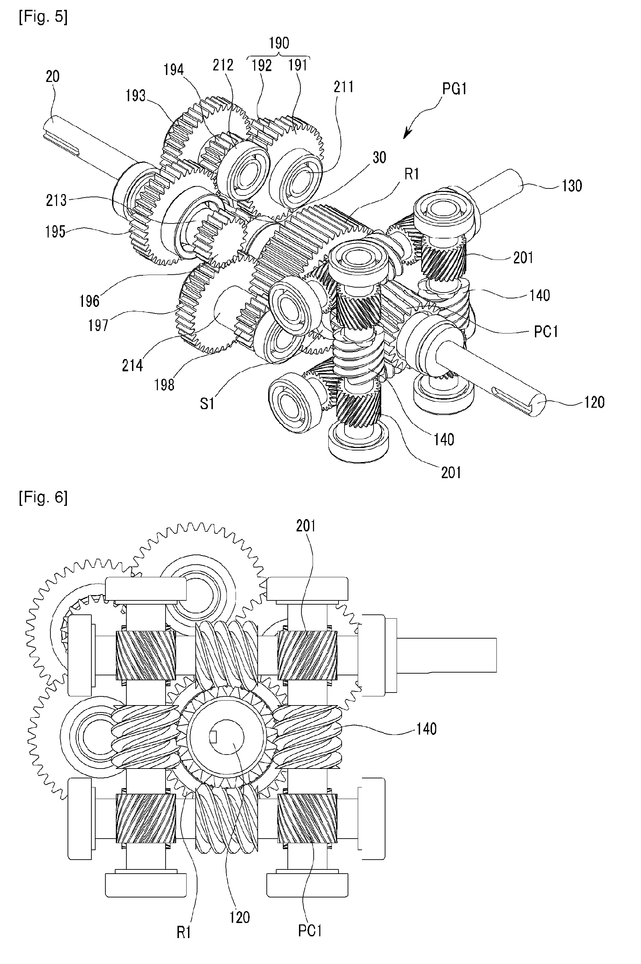

Below, referencing Figs.5 and 6, a power transmitting apparatus according to second embodiment of the invention will be described in detail.

Fig. 5 is a slant view illustrating construct of a power transmitting apparatus according to second embodiment of the invention, and Fig. 6 is a rear view illustrating construct of a power transmitting apparatus according to second embodiment of the invention.

The power transmitting apparatus according to second embodiment of the invention is similar to the power transmitting apparatus according to first embodiment of the invention. Therefore, same parts will be indicated same numerals and indicia throughout Figures, and detailed description of them will be omitted.

As shown in Figs. 5 and 6, the power transmitting apparatus according to second embodiment of the invention includes an input shaft 20, a reduction unit 190, a planetary gear set PG1, an output shaft 120, a transmit unit 200, and a control part(160: refer to Figs.1 and 2).

Detailed description concerning the input shaft 20, the planetary gear set PG1, the output shaft 120, and the control part(160) will be omitted.

In the power transmitting apparatus according to second embodiment of the invention, the reduction unit 190 includes four shafts 211, 212, 213, and 214 which are aligned parallel to the input shaft 20, and eight gears 191, 192, 193, 194, 195, 196, 197, and 198, every two of which are respectively mounted on each of the shafts 211, 212, 213, any 214.

On a first shaft 211, first and second gears 191 and 192 having different numbers of gear teeth are mounted, and the first gear 191 is gear-connected to the drive gear 30 of the input shaft 20. The number of gear teeth of the first shaft 191 is smaller than that of the second gear 192.

On a second shaft 212, third and fourth gears 193 and 194 having different numbers of gear teeth are mounted, and the third gear 193 is gear-connected to the second gear 192 of the first shaft 211. The number of gear teeth of the third shaft 193 is smaller than that of the fourth gear 194.

On a third shaft 213, fifth and sixth gears 195 and 196 having different numbers of gear teeth are mounted, and the fifth gear 195 is gear-connected to the fourth gear 194 of the second shaft 212. The number of gear teeth of the fifth shaft 195 is smaller than that of the sixth gear 196.

On a fourth shaft 214, seventh and eighth gears 197 and 198 having different numbers of gear teeth are mounted, the seventh gear 197 is gear-connected to the sixth gear 196 of the third shaft 213, and the eighth gear 198 is gear-connected to the ring gear R1 of the planetary gear set PG1. The number of gear teeth of the seventh shaft 197 is smaller than that of the eighth gear 198.

And, among the two gears formed on each one shaft, the gear having smaller number of gear teeth is gear-connected to the shaft that closes to the drive power source on the power transferring line, the gear having larger number of gear teeth is gear-connected to the shaft that closes to the planetary gear set on the power transferring line. For example, on the second shaft 212, the third gear 193 having smaller number of gear teeth is gear-connected to the second gear 192 of the first shaft 211 that closes to the drive power source 10 on the power transferring line. Hence the rotate speed of the input shaft 20 decreases gradually as passing shafts one-by-one, and then final decreased rotate speed transferred to the first operative member R1 of the planetary gear set PG1.

The power transmitting apparatus according to second embodiment of the invention shows that the reduction of rotate speed could be performed using four shafts and eight gears, which is not to limit the scope of the invention, it is possible that at least one shaft and at least two gears could be used for reduction.

The transmit unit 200 includes transmit input shafts 130, first gears 140, and second gears 201. In this embodiment, an example using four transmit input shafts 130, four first gears 140, and eight second gears 201, which is not to limit the scope of the invention.

A plurality of transmit input shaft 130 are perpendicular to each other, and perpendicular to the output shaft 120.

First gears 140 are respectively mounted on each of transmit input shafts 130 to rotate on the transmit input shafts 130, and gear-connected to a second operative member PC1 of the planetary gear set PG1. And, since the transmit input shafts 130 are perpendicular to the output shaft 120, the rotate axis of the first gears 140 is perpendicular to that of the second operative member PC1. Hence worm gears or helical gears could be used as the first gears 140.

Second gears 201 are respectively mounted on each of transmit input shafts 130 to rotate on the transmit input shafts 130. One second gear 201 mounted on one transmit input shaft 130 is gear-connected to another second gear 201 mounted on another transmit input shaft 130 so that the transmit power could be transferred. And, since the transmit input shafts 130 are perpendicular to each other, the rotate axis of the second gears 140 are also perpendicular to each other. Hence worm gears or helical gears could be used as the second gears 201.

And, since a plurality of first gears 140 are gear-connected to a second operative member PC1 to transfer transmit power, the slip that may be occurred at connecting positions between the transmit power source 150 and the second operative member PC1, could be decreased to a minimum.

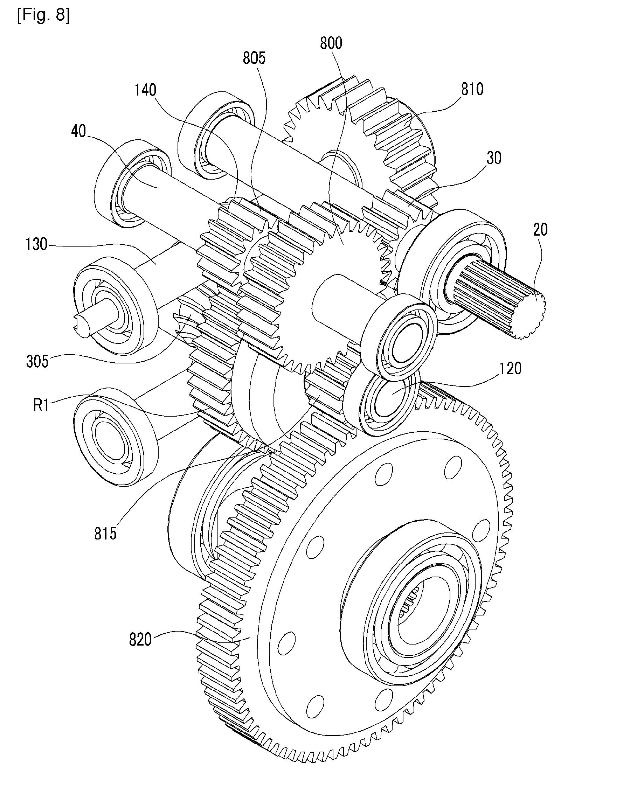

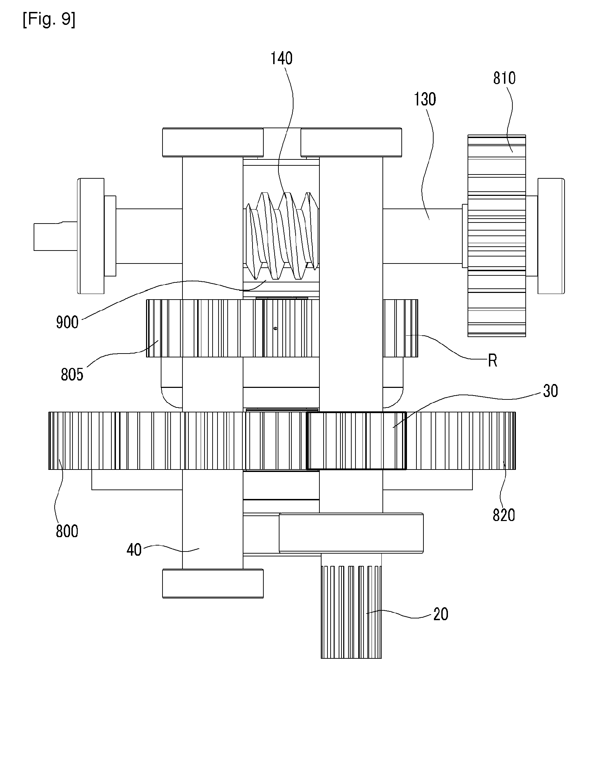

Fig. 8 is a slant view illustrating construct of a power transmitting apparatus according to third embodiment of the invention, and Fig. 9 is a plane view illustrating a power transmitting apparatus according to third embodiment of the invention.

Referring to Figs. 8 and 9, the power transmitting apparatus includes an input shaft 20, a drive gear 30, a reduction shaft 40, a first reduction gear 800, a second reduction gear 805, a ring gear R1, a worm wheel 305, an output shaft 310, a first output gear 815, a differential gear 820, a transmit input shaft 130, a worm gear 140, a transmit input shaft gear 810, and a carrier extended part 900.

The input shaft 20 is rotated by a drive power source(10, Fig.1), and has the drive gear 30 formed on outer circumference surface of its one side. The reduction shaft 40 is parallel to the input shaft 20 with a gap, and has the first reduction gear 800 circumscribed with the drive gear 30 formed on its one side. And, on the reduction shaft 40, the second reduction gear 805 is formed with a gap between the first reduction gear 800.

The radius of the first reduction gear 800 is larger than that of the drive gear 30 so as to effectively reduce the rotate speed of the input shaft 20 and to increase torque. And, the radius of the second reduction gear 805 is smaller than that of the first reduction gear 800.

The output shaft 120 is arranged below and parallel to the reduction shaft 40 with a gap, and a sun gear S1(Fig.7) is mounted on the output shaft 310. The ring gear R1 in which the sun gear S1 is encircled, is mounted on one side of the output shaft 120. The gear teeth formed on outer circumference surface of the ring gear R1 is circumscribed with the second reduction gear 805.

The radius of the second reduction gear 805 is smaller than those of the first reduction gear 800 and the ring gear R1 so as to effectively reduce the rotate speed of the input shaft 20 and to increase torque.

The sun gear S1(Fig.7) and the planet gear P1(Fig.7) is mounted in the inner space of the ring gear R1 to form a planetary gear set.

And the planet carrier C1(Fig.7) connected to the rotate axis of the planet gear P1 has the extended part 900(Fig.9) extended to the longitudinal direction of the output shaft 120, The extended part 900 has the worm wheel 302 on its outer circumference surface.

The output shaft 120 is perpendicular to the transmit input shaft 130, on which the worm gear 140 is formed corresponding to the worm wheel 302. The transmit input shaft gear 810 is formed on the one end of the transmit input shaft 130.

The transmit input shaft gear 810 rotates the worm gear 140, the worm wheel 302, and the planet carrier C1 (Fig.7) with power transferred from the transmit power source 150(Fig.1).

As mentioned before, the rotate speed of the output shaft 120 connected to the sun gear S1 is controlled according to the rotate speed, stop, forward rotate, and reverse rotate of the transmit input shaft 130, while the rotate of the transmit input shaft 130 is controlled according to the operation of the brake.

The inner structure of the ring gear R1 and related planetary gear set is shown in Fig.7, and their detailed description has been mentioned before.

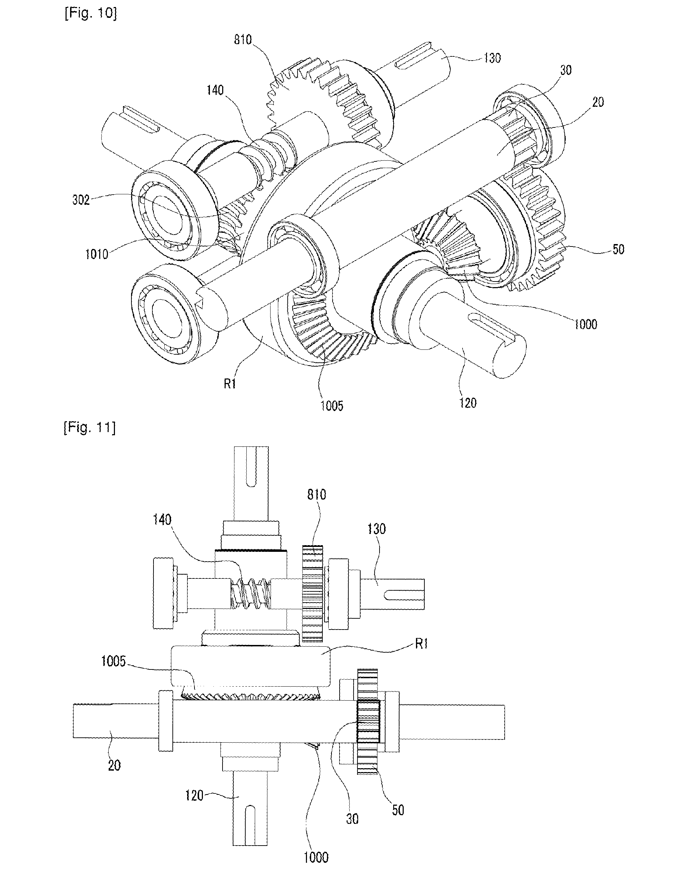

Fig. 10 is a slant view illustrating a power transmitting apparatus according to forth embodiment of the invention, and Fig. 11 is a plane view illustrating a power transmitting apparatus according to forth embodiment of the invention.

Referring to Figs. 10 and 11, the power transmitting apparatus includes an input shaft 20, a drive gear 30, a reduction shaft 40, a drive bevel gear 1000, a passive bevel gear 1005, a ring gear R1, a carrier extended part 1010, a worm wheel 302, a worm gear 140, a transmit input shaft 130, and a transmit input shaft gear 810.

The drive gear 30 is formed on one end of the input shaft 20, and the drive gear 30 is circumscribed with the reduction gear 50.

The dive bevel gear 1000 is formed on one side of the reduction gear 50, the passive bevel gear 1005 corresponding to the drive bevel gear 1000 is formed on one side of the ring gear R1.

By the drive bevel gear 1000 and the passive bevel gear 1005, the input shaft 20 could rotates the reduction gear 50 and the ring gear R1.

The inner structure of the ring gear R1 and related planetary gear set is shown in Fig.7, and their detailed description has been mentioned before.

The carrier extended part 1010 is extended to the longitudinal direction of the output shaft 120 from one side of the planet carrier C1(Fig.7). The extended part 1010 has the worm wheel 302 on its outer circumference surface.

The worm gear 140 formed corresponding to the worm wheel 302 is mounted on the transmit input shaft 130, and the transmit input shaft gear 810 is formed on one end of the transmit input shaft 130.

In a power transmitting apparatus according to forth embodiment of the invention, the input shaft 20 is perpendicular to the output shaft 120, the transmit input shaft 130 is parallel to the input shaft 20.

It is preferable that a bearing is mounted between the output shaft 120 and the carrier extended part 1010 extended to one direction of the output shaft 301 from the carrier C1.

As mentioned above, for effectively transferring rotate force from the input shaft 20 to the ring gear R1, a structure of bevel gear is employed.

And, by controlling the rotate characteristics (speed and direction) of the carrier extended part 1010 using the worm wheel 302 formed on the carrier extended part 1010 and the worm gear 140 formed on the transmit input shaft 130, the rotate speed of the output shaft 120 can be easily controlled.

The foregoing discussion discloses and describes the preferred embodiments for the present invention. However, one skilled in the art will readily recognize from such discussion, and from the accompanying drawings and claims, that various changes, modifications and variations can be made therein without departing from the true spirit and fair scope of the invention as defined in the following claims.

### INDUSTRIAL USAGES OF THE INVENTION

The power transmitting apparatus according to the invention having above mentioned compositions, using the planetary gear set and the transmit power source, may realize various forward transmit steps and reward transmit steps. Especially, it uses first and second carrier gears mounted on a idler shaft for realizing the reward transmit steps, which lead to the result that the reward transmit steps can be realized by the same manner as that for realizing the forward transmit steps.

Since additional devices may be couples with an input shaft as well as with a reduction shaft, various rotate speed for each of the additional devices may be provided.

The braking is operated by using a transmit power source for transmission without separate braking system, so the construction of apparatus may be simplified and the manufacture cost can be decreased.

The loss of torque of the transmit power source may be decreased since the power for transmitting from the transmit power source is inputted to the planetary gear set through a worm gear.

The transmit operation may be operated by a transmit power source with low rotate speed since the rotate speed of the drive power source is inputted via the planetary gear set after reduced.

The slip that may be occurred at connect portions between the planetary gear set and the transmit power source, may be minimized, since the power from the transmit power source is coupled to the planetary gear set via a plurality of worm gears.

## Claims

1. A power transmitting apparatus is **characterized** that it comprises :
an input shaft that its one end constantly connected to a drive power source for supplying power, and on which a drive gear is fixed;
a reduction unit that is connected to the drive gear, for reducing the rotate speed of the input shaft;
a planetary gear set which comprises a first operative member connected to the reduction unit and coupled with the rotate speed of the reduction unit, a second operative member supplied with transmit power, and a third operative member to generate output speed;
a transmit unit that constantly connected to a transmit power source and supplied with transmit power therefrom, and connected to the second operative member for transmitting the transmit power thereto; and
an output shaft fixed at the third operative member of the planetary gear set for transmitting the output speed,
wherein the rotate axis of the second operative member is perpendicular to the rotate axis of the reduction unit.

2. The power transmitting apparatus according to claim 1, **characterized in that** the planetary gear set is a single pinion planetary gear set including operative members that comprise a sun gear, a planet carrier, and a ring gear, wherein the ring gear may operate as the first operative member, the planet carrier may operate as the second operative member, and the sun gear may operate as the third operative member.

3. The power transmitting apparatus according to claim 2, **characterized in that** the power transmitting apparatus further includes a control part, wherein the control part may control the operation of the transmit power source according to the speed of the output shaft and the operation level of a brake.

4. The power transmitting apparatus according to claim 3, **characterized in that** the control part is capable of controlling the rotate speed of the output shaft and may perform braking, by changing the rotate speed of the transmit power source.

5. The power transmitting apparatus according to claims 1 to 4, **characterized in that** the transmit power source may be a motor.

6. The power transmitting apparatus according to claim 1, **characterized in that** the reduction unit comprises :
a reduction shaft aligned parallel with the input shaft;
a reduction gear fixed to the reduction saft and gear-connected to the drive gear;
a forward gear and a reward gear mounted on the reduction shaft and being rotatable on the reduction shaft; and
a synchronizer that selectively connects one of the forward gear and the reward gear to the reduction shaft to rotate with the reduction shaft,
wherein the forward gear is constantly gear-connected to the first operative member.

7. The power transmitting apparatus according to claim 6, **characterized in that** the reduction unit further includes :
an idle shaft that is supplied with the rotate speed of the reward gear to rotate;
a first carrier gear that is fixed to the idle shaft and gear-connected to the first operative member; and
a second carrier gear that is fixed to the idle shaft and gear-connected to the forward gear.

8. The power transmitting apparatus according to claim 6, **characterized in that** the synchronizer may operate according to the position of an operative lever.

9. The power transmitting apparatus according to claim 1, **characterized in that** at least one of the other end of the input shaft and the reduction unit is connected an additional device.

10. The power transmitting apparatus according to claim 1, **characterized in that** the transmit unit includes:
a transmit input shaft that its one end is connected to the transmit power source and supplied with the transmit power from the transmit power source; and
a worm gear formed on the other end of the transmit input shaft and gear-connected to the second operative member.

11. The power transmitting apparatus according to claim 1, **characterized in that** the reduction unit includes a plurality of shafts aligned parallel with the input shaft and a plurality of gears mounted on the plurality of shafts,
wherein two gears having different numbers of gear teeth are mounted on each one of the plurality of shafts, one gear of two gears formed on one shaft is gear-connected to one gear of two gears mounted on another shaft so that power from the input shaft may be transmitted to the planetary gear set,
one gear of the plurality of gears is gear-connected to the drive gear, another gear of the plurality of gears is gear-connected to the first operative member.

12. The power transmitting apparatus according to claim 11, **characterized in that** the gear having smaller number of gear teeth of two gears formed on each of the shafts is gear-connected to the gear on the shaft which is closer to the drive power source in power transmitting line, while the gear having larger number of gear teeth of two gears formed on each of the shafts is gear-connected to the gear on the shaft which is closer to the planetary gear set in power transmitting line.

13. The power transmitting apparatus according to claim 1, **characterized in that** the
transmit unit includes:
a plurality of transmit input shafts perpendicular to each other and also perpendicular to the output shaft;
first gears mounted and rotated on each of the transmit input shafts, and gear-connected to the second operative member; and
second gears mounted and rotated on each of the transmit input shafts,
wherein one second gear mounted one transmit input shaft is gear-connected to another second gear mounted another transmit input shaft, one of the transmit input shafts is connected to the transmit power source and supplied with transmit power.

14. The power transmitting apparatus according to claim 13, **characterized in that** the first gears are worm gears and the second gears are helical gears.

15. A planetary gear set, **characterized in that** it comprises:
a sun gear, with gear teeth formed on its outer circumference surface, that is attached a rotate shaft so that can transmit power to the rotate shaft or be supplied with power from the rotate shaft;
a ring gear, with gear teeth formed on its inner circumference surface, that encircles the sun gear and relatively rotates about the sun gear;
a plurality of pinion gears that are gear-connected to the gear teeth of the sun gear's outer circumference surface and the gear teeth of the ring gear's inner circumference surface; and
a planet carrier on which the plurality of pinion gears rotatably mounted, that rotates according to the rotate of the pinion gears,
wherein one side of the planet carrier has an extended part that extends along the direction of its rotate axis, gear teeth slant to the rotate axis are formed on the outer circumference surface of the extended part so as to be connected to a worm gear or a helical gear.

16. The planetary gear set according to claim 15, **characterized in that** the outer circumference surface of the ring gear also have gear teeth.

17. A power transmitting apparatus **characterized** that it comprises:
an input shaft of which a drive gear is formed on its outer circumference surface of one side;
a reduction unit that includes a reduction shaft having a reduction gear which is gear-connected to the drive gear;
a ring gear with gear teeth formed on its outer circumference surface that is circumscribed with the reduction gear;
a plurality of pinion gears circumscribed with gear teeth formed on inner circumference surface of the ring gear;
an output shaft on which a sun gear circumscribed with the plurality of pinion gears mounted;
a planet carrier, connected to center shafts of the pinion gears, that rotates on the output shaft according to the rotate of the pinion gears;
an extended part that extends from the planet carrier to the axis direction of the output shaft;
a worm gear and a drive helical gear that are formed on the outer circumference surface of the extended part;
a transmit input shaft, with a worm wheel formed on its outer circumference surface and perpendicular to the output shaft, that rotates by a transmit power source; and
a control part that controls the rotate speed of the transmit input shaft.

18. The power transmitting apparatus according to claim 17, **characterized in that** the reduction unit may include a first reduction gear formed on the reduction shaft; and a second reduction gear formed on the reduction shaft with a gap between the first reduction gear.

19. The power transmitting apparatus according to claim 18, **characterized in that** the first reduction gear is connected to the drive gear, and the second reduction gear is the gear teeth formed on the outer circumference surface of the ring gear.

20. The power transmitting apparatus according to claim 17, **characterized in that** the reduction shaft is arranged parallel with the input shaft, and the input shaft and the output shaft are aligned on a same axis.

21. A power transmitting apparatus **characterized** that it comprises:
an input shaft of which a drive gear is formed on its outer circumference surface of one side;
a reduction shaft having a reduction gear which is gear-connected to the drive gear;
a driving bevel gear formed on one end of the reduction shaft;
a ring gear with a passive bevel gear formed on its one side, the passive bevel gear is gear-connected to the drive bevel gear;
a plurality of pinion gears circumscribed with gear teeth formed on inner circumference surface of the ring gear;
an output shaft on which a sun gear circumscribed with the plurality of pinion gears mounted and rotated together;
a planet carrier, connected to center shafts of the pinion gears, that rotates on the output shaft according to the rotate of the pinion gears;
an extended part that extends from the planet carrier to the axis direction of the output shaft;
a worm gear and a drive bevel gear that are formed on the outer circumference surface of the extended part;
a transmit input shaft, with a worm wheel formed on its outer circumference surface and perpendicular to the output shaft, that rotates by a transmit power source; and
a control part that controls the rotate speed of the transmit input shaft according to the rotate speed of the output shaft and operation of a brake.

22. The power transmitting apparatus according to claim 21, **characterized in that** the passive bevel gear is formed on one side of the ring gear, and the extended part is extended from the other side of the ring gear.

23. A power transmitting apparatus **characterized** that it comprises:
an input shaft of which a drive gear is formed on its outer circumference surface of one side;
a ring gear arranged at the end of the input shaft and rotated by the input shaft;
a plurality of pinion gears circumscribed with gear teeth formed on inner circumference surface of the ring gear;
an output shaft on which a sun gear circumscribed with the plurality of pinion gears mounted;
a planet carrier, connected to center shafts of the pinion gears, that rotates on the output shaft according to the rotate of the pinion gears;
an extended part that extends from the planet carrier to the axis direction of the output shaft;
a worm gear and a drive bevel gear that are formed on the outer circumference surface of the extended part;
a transmit input shaft, with a worm wheel formed on its outer circumference surface and perpendicular to the output shaft, that rotates by a transmit power source; and
a control part that controls the rotate speed of the transmit input shaft according to the rotate speed of the output shaft and operation of a brake.
